# EUROPEAN PATENT APPLICATION

(11) **EP 2 468 661 A1**
(43) Date of publication of application: **27.06.2012**
(21) Application number: 10405247.7
(22) Date of filing: 23.12.2010
(51) Int. Cl.: B65D 77/06

(54) **Bag-in-box package**

(71) Applicant: Amcor Flexibles Kreuzlingen Ltd., 8212 Neuhausen am Rheinfall (CH)
(72) Inventor: O'Connor, Sean, Cumbria CA13 9ES (GB)
(74) Representative: Gernet, Samuel Andreas

(57) **Abstract**

In a package comprising an outer box made of cardboard material and an inner flexible bag made of plastic material for the packaging of dry food products such as cereals the plastic material is a coextruded multilayer film comprising at least a high moisture barrier layer, a moderate oxygen barrier layer, an odour or flavour barrier layer, a volatiles barrier layer reducing the migration of short chain hydrocarbons and performing a very good hot tack and peel sealability. The multilayer film comprises a layer of amorphous polyethylene terephthalate (PETG), a layer of a ionomer and at least one layer of high density polyethylene (HDPE) as an inner or sealing layer.

## Description

The present invention relates to a package comprising an outer box made of cardboard material and an inner flexible bag made of plastic material for the packaging of dry food products such as cereals.

Such bag-in-box packages are known and are used, among others, for packaging dry food products such as cereals. These packages offer the advantage that the cardboard can be easily printed and, after use, can be folded flat and recycled. Furthermore, the packages have a well-stackable form.

Over the past few years there has been a growing awareness and concern regarding contaminants in recycled board, inks and the external environment migrating in food products.

A typical volatile contaminant would be, but not exclusively, diisopropyl naphthalene (DIPN). This is a particular problem for bag-in-box food packages where recycled board can be used for economical and logistical reasons to produce the outer box and where the inner bag material does not provide a functional barrier to the volatile contaminants migrating out of the box. In such circumstances, the food product may become contaminated and yielded unfit for consumption.

In such cases, the available solutions have been either to change to virgin board, which helps reduce the problem but incurs significant extra cost and possible supply implications, or to employ a high barrier laminate complex inner bag. This inner bag would typically consist of a multi process laminate structure containing three or more individual film and or foil layers. Aluminium or other oxide based barrier layers would typical be incorporated. Such structures would generally require a multiple process manufacturing regime with all the inherent costs and environmental impacts. A known material used to date is a metallised laminate with 18 µm metallised OPP / 35 µm HDPE-Surlyn.

It is an object of the present invention to provide a bag-in-box package for packaging dry food products such as cereals, with an inner bag plastic material providing a functional and cost effective barrier to migration of volatiles into cereal products from the carton, ink or the external environment. The plastic material must also provide moisture barrier and a high performance peelable seal system.

The foregoing object is achieved according to the invention in that the plastic material is a coextruded multilayer film comprising at least a high moisture barrier layer, a moderate oxygen barrier layer, an odour or flavour barrier layer, a volatiles barrier layer reducing the migration of short chain hydrocarbons and performing a very good hot tack and peel sealability.

This invention describes a range of structures and method of manufacturing which is/are demonstrated to provide a functional barrier to the contaminants described above in a "single film" structure. These materials are demonstrated to provide a functional barrier between the recycled board box and the product contained in such barrier materials.

The invention is a mono web multilayer film manufactured by the coextrusion process and/or a combination of coextrusion and coating of three or more layers where one or more, or a combination of those layers provide a proven functional barrier to the materials described above and similar volatile materials.

The layers may consist of pure barrier resins or blends of barrier resins and other functional materials and/ or fillers.

The invention may also provide low levels of moisture permeability and other functions such as very good hot tack and peel sealability.

The invention is manufactured in such a way as to offer significant advantage in terms of "manufacturing footprint".

The package according to the invention is lower in cost than known packages, has a lower environmental impact and a better life cycle analysis.

In a preferred embodiment of the invention the multilayer film comprises a layer of amorphous polyethylene terephthalate (PETG, a layer of a ionomer, such as Surlyn^{®}, and at least one layer of high density polyethylene (HDPE), preferably as an inner or sealing layer.

Cereals require a film that delivers:
a) A high moisture barrier, because most dry cereals are very hygroscopic. The high moisture barrier is achieved by the HDPE layers.
b) A moderate oxygen barrier. If the oxygen barrier is too good, some products can't breathe, e.g. cornflakes. This eliminates structures such as PET/PE, Nylon/PE or EVOH containing coextrusions.
c) An odour or flavour barrier, e.g. for chocolate containing cereals. The odour or flavour barrier is achieved by the PETG layer.
d) A volatiles barrier layer to prevent and/or slow down the migration of short chain hydrocarbons, e.g. mineral oils that are coming from the recycled paper board and the inks. The volatiles barrier is achieved by the PETG layer.
e) The film also needs to have wide temperature differential to run on VFFS (vertical form fill and seal) packaging machines, high hot tack to seal through dust and contamination and also delivery an easy open peelable for the consumer.

All these requirements are achieved by using a combination of HDPE, PETG and ionomers in a multilayer coextrusion.

Preferably, the multilayer film is a blown film.

The outer box is preferably made of recycled board.

A preferred use of the package according to the invention is the packaging of dry food products, e.g. breakfast cereals.

## Claims

1. Package comprising an outer box made of cardboard material and an inner flexible bag made of plastic material for the packaging of dry food products such as cereals,
**characterised in that**
the plastic material is a coextruded multilayer film comprising at least a high moisture barrier layer, a moderate oxygen barrier layer, an odour or flavour barrier layer, a volatiles barrier layer reducing the migration of short chain hydrocarbons and performing a very good hot tack and peel sealability.

2. Package according to claim 1, wherein the multilayer film comprises a layer of amorphous polyethylene terephthalate (PETG), a layer of a ionomer and at least one layer of high density polyethylene (HDPE), preferably as an inner or sealing layer.

3. Package according to claim 1 or 2, wherein the multilayer film is a blown film.

4. Package according to anyone of claims 1 to 3, wherein the outer box is made of recycled board or virgin board.

5. Package according to anyone of claims 1 to 4, wherein the layers consist of pure barrier resins or blends of barrier resins and other functional materials and /or fillers.

6. Use of a package according to anyone of the preceding claims for the packaging of dry food products, e.g. breakfast cereals.
